# EUROPEAN PATENT APPLICATION

(11) **EP 1 137 198 A2**
(43) Date of publication of application: **26.09.2001**
(21) Application number: 01106764.2
(22) Date of filing: 17.03.2001
(51) Int. Cl.: H04B 7/204

(54) **Method and apparatus for downlink communication resource control**

(30) Priority: 23.03.2000 US 535254
(71) Applicant: Hughes Electronics Corporation, El Segundo, California 90245-0956 (US)
(72) Inventor: Davarian, Faramaz, Los Angeles, California 90064 (US); Galicia, Felicisimo W., Torrance, California 90505 (US)
(74) Representative: Steil, Christian, Dipl.-Ing.

(57) **Abstract**

A method and system for controlling a satellite resource such as downlink power includes generating a plurality of beams (32) at a satellite (14) with a predetermined amount of a resource level. The signal is monitored at a ground terminal (18) and the amount of the resource received is reported to a network operations center (16). The network operations center (16) may change the allocation of the resources in the satellite (14). For example, if power is used, the power level within a cell (36) may be increased when the attenuation level is above a predetermined threshold indicative of a weather-hampered status (Fig. 1).

## Description

### Technical Field

The present invention relates to satellite communications, and more particularly, to controlling the amount of power for various beams of a satellite in response to weather conditions.

### Background Art

Transmissions with extraterrestrial satellites in frequency bands above 10 GHz suffer significantly from degradation in the presence of rain events. To provide good link availability, compensation for rain attenuation is desirable. Commonly, satellites transmit to the earth using several beams. To provide good link availability, known satellite systems allocate a constant rain margin for all beam locations regardless of weather condition.

A need to conserve power is typically a goal in designing satellite systems. Measures are typically taken to provide circuitry that reduces the amount of power from the system. By reducing the amount of power drawn from a system, the overall cost is reduced.

Conventional systems allocate a constant rain margin for all locations. This is deemed a wasteful practice because studies of weather patterns indicate that rain is only present in a small number of beams at a time. Therefore, the constant additional power provided to overcome rain attenuation is not necessary.

It would therefore be desirable to provide a spacecraft system that uses overall a reduced amount of power from those of conventional systems in the presence of a weather condition.

### Summary Of The Invention

It is therefore one object of the invention to provide a satellite system that produces many beams that is capable of distributing radiated power to the beams in response to a weather condition in that beam.

In one aspect of the invention, a method of controlling downlink power comprises the steps of:
generating a plurality of beams to correspond cells in a service area, each beam having an independently controllable power level;
monitoring an attenuation level of each cell; and
increasing said predetermined power level of a cell when said attenuation is above a predetermined threshold. The threshold is indicative of a weather-hampered status.

The present invention provides two methods that may be used separately or in combination to monitor the attenuation level within a cell. The first is to measure the attenuation level at terminals within the cells. This is preferably done using a beacon signal broadcast from the satellite and measuring the attenuation of the beacon signal. The second is to monitor sources such as the National Weather Service or NEXRAD radar service or other available sources to determine an attenuation level if a predetermined cell is experiencing other hampered communications.

In a further aspect of the invention, a communications system has a satellite that generates a plurality of beams. The satellite has a power table that includes a respective power level for each of the plurality of beams. An attenuation monitor generates an attenuation signal in response to the attenuation at each beam. A network operations center (NOC) is coupled to the attenuation monitor and the satellite. The network operations center receives the attenuation signals for each beam and increases a power level of a beam generated by the satellite in response to an attenuation signal above a predetermined threshold.

One advantage of the invention is that the total power level used by a satellite is reduced from prior known satellite systems. Another advantage of the invention is that the system can be configured to provide an increased power level to each beam on a graduated level in response to the attenuation level.

Yet another advantage of the system is that only a small amount of network overhead is required to implement the system.

Other objects and features of the present invention will become apparent when viewed in light of the detailed description of the preferred embodiment when taken in conjunction with the attached drawings and appended claims.

### Brief Description of the Drawings

Figure 1 is a high level system level view of a communication system according to the present invention.

Figure 2 is a system level block diagram of a power control system according to the present invention.

Figure 3 is a table illustrating various conditions corresponding to attenuation level with corresponding margin increases.

Figure 4 is a flow chart of a control method for downlink power control.

Figure 5 is a block diagram of an alternative embodiment of the present invention.

Figure 6 is a flow chart of the downlink power control operation of Figure 5.

Figure 7 is a partial block diagram of an alternative system according to the present invention that uses a combination of the systems illustrated in Figure 2 and Figure 5.

### Best Modes For Carrying Out The Invention

In the following figures the same reference numerals will be used to identify the same components in the various views. The following description provides specific examples of various attenuation monitoring systems. These examples are provided for illustration purposes and are not meant to be limiting. Those skilled in the art would recognize various alternative embodiments that are within the scope of the present invention.

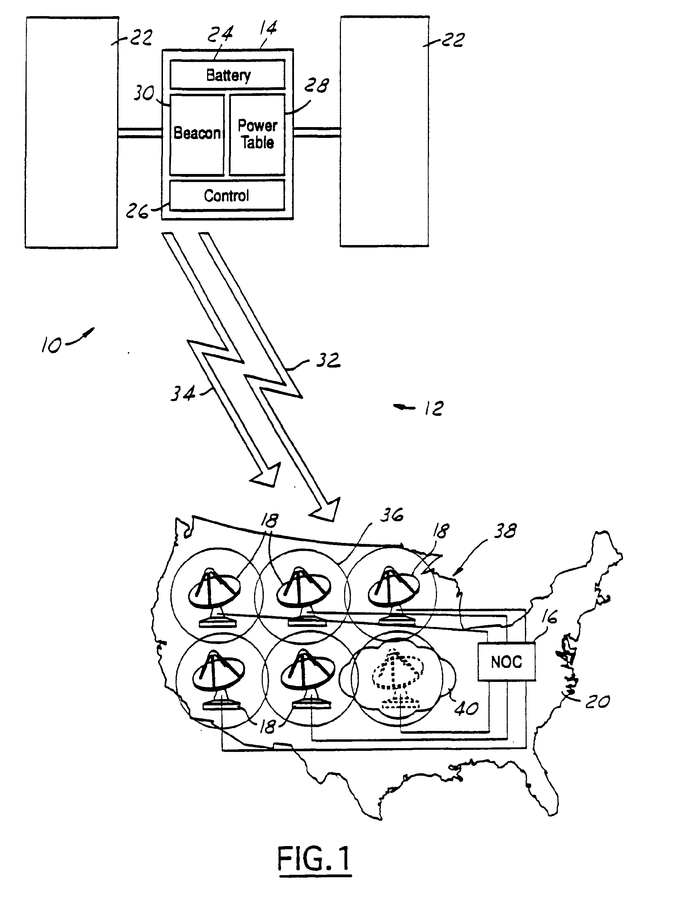

Referring now to Figure 1, a communications system 10 has a downlink power control system generally illustrated by 12. The communications system 10 has a satellite 14 that is in two-way communication with a network operations center 16 and may be in one-way or two-way communication with a plurality of ground terminals 18 (users) located on the earth 20. The present invention is particularly suitable for satellite communications above about 10 GHz. However, the teachings of the present invention may be applied to satellite communications having various frequencies.

Satellite 14 has a power system such as solar panels 22 and a battery 24. The power system of a satellite formed according to the present invention provides enough power capable of generating a plurality of beams and operating the satellite plus enough reserve power to provide added power to a statistically predetermined number of beams that are experiencing a weather hampering situation. The power system with reserve of the present invention is smaller than a power system of the prior art, everything else being equal.

Satellite 14 has a control circuit 26 that performs the telemetry tracking and communications of the satellite as is common in the art. Satellite 14 has a power table 28 and a beacon 30 coupled to control circuit 26. The control circuit 26 generates communication signals 32 as well as beacon signals 30 from satellite 14. As will be further described below, communications signals 32 and beacon signals 34 may be one and the same.

In general, the downlink power control system 12 is used to sense the attenuation levels within the various cells 36 within a service area 38. The amount of attenuation corresponds to the atmospheric conditions present within the cell 36. For example, a cloud 40 producing rain may produce a sufficient attenuation to cause other hampered communications such as low signals levels or no communication signal levels. A simple type system, for example, may provide an additional 10 dB margin to rainy cells whereas 0 dB additional margin are provided to cells having a clear sky. In a more complex system as will be further described below, the amount of attenuation may be used to vary the amount of increased power to a particular beam. For example, in a 10 beam system wherein 10 dB margin is supplied to two beams in rain, a 5.5 dB reduction in total radiated power from the satellite is achieved. This is a substantial power savings.

The present invention is premised on the probability of many cells experiencing rain simultaneously is small. For example, it has been shown that the probability of having three or more beams experiencing rain in a 12 beam system covering the continental United States is only 0.44 percent. Therefore, only a limited amount of power reserve needs to be provided to protect the communications system against rain fade for most of the time. While a power increase is described below, gain may also be changed in addition to or instead of power.

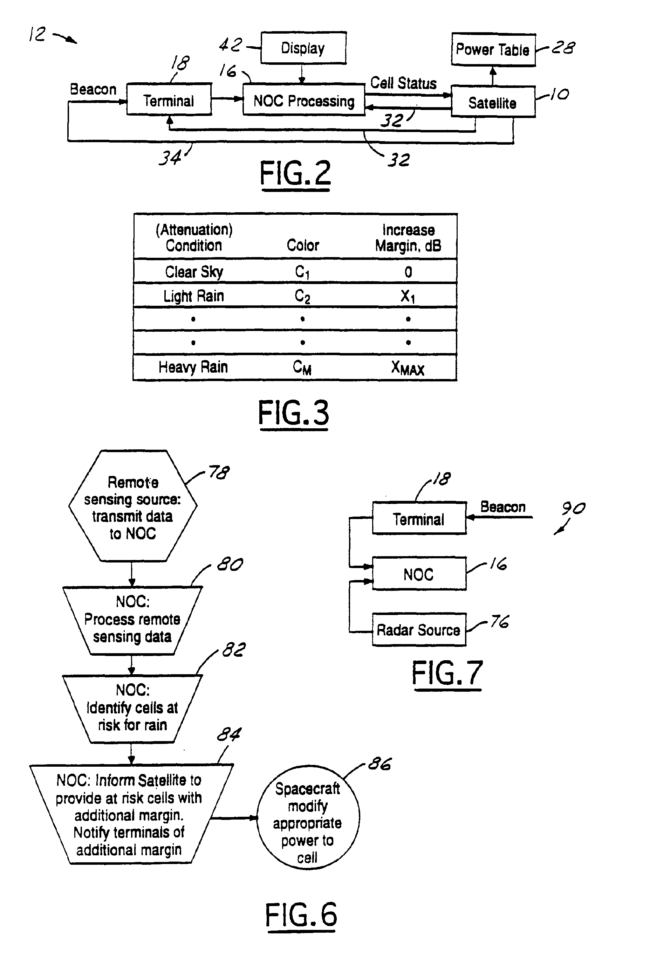

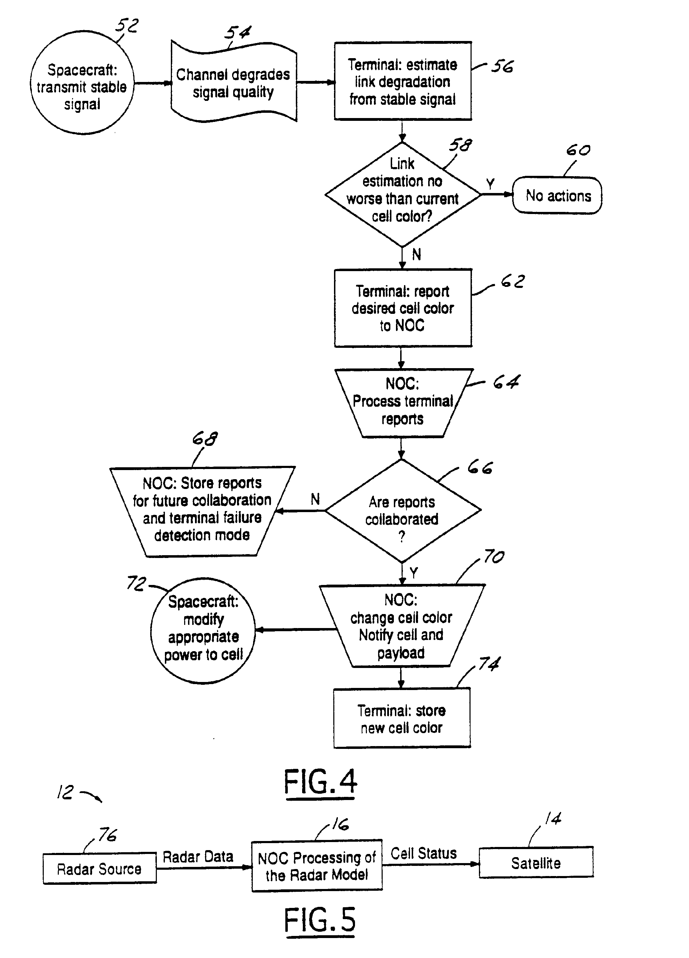

Referring now to Figure 2, a first embodiment of a downlink power control system 12 is illustrated that uses measurements made by ground terminals 18 to offer a highly efficient and robust power control system to save satellite power and improve network availability. As described briefly above, a network operations center (NOC) 16 is coupled to a plurality of terminals 18. The terminals 18 receive communication signals 32 from satellite 10 and a beacon signal 34 from satellite 10. The network operations processing center provides information to satellite as to the status of weather within a cell. The NOC 16 communicates with satellite 10 to provide an updated power table 28. The power table 28 is an allocation of the various powers of the various beams. The power table 28 provides increased power to the specific beams whose cells are experiencing atmospheric attenuation. Likewise, the power table 28 provides decreased power to formerly weather-hampered beams. The NOC 16 may also have a display 42 coupled thereto. The display may comprise a map and sections showing the various cells. Each cell may, for example, be color coded with different colors depending on the amount of attenuation present in the cell. In operation of this embodiment, a constant level signal such as a beacon or a communication signal is downlinked to all the cells continuously so that the beam condition due to atmosphere may be monitored. The amount of attenuation of the constant level signal is transmitted from terminal 18 to the NOC 16. The NOC 16 may make a power table determination based on an inquiry from a single terminal or based upon a collaboration scheme wherein a certain number of requests made by multiple terminals within a time period are made before the NOC changes the power table 28. Each terminal 18 or selected terminals from a predetermined area of the cell provides an attenuation indication to NOC 16. The terminal 18 may provide an attenuation indication to NOC 16 in a variety of manners. For example, the amount of attenuation in decibels may be provided to NOC 16. The NOC 16 may allocate additional power to the cell or wait until a predetermined number of terminals within the cell experience attenuation. One advantage to this scheme is that performance degradation in a terminal or terminal failure may be detected based upon the information from the various terminals within a cell.

An alternative method for operating is to observe communication signal 32. This may be done if the communication signal is stable and is transmitted frequently. As will be evident to those skilled in the art, it may be difficult to guarantee that a particular communication channel is power stable. Fluctuations in traffic can cause instabilities in the power level of a downlink signal. These variations may be mistaken for changes in atmospheric condition. Preferably, a stable signal is used to determine attenuation.

One feature of the present invention is that the beacon signal 34 may be calibrated. To calibrate the beacon signal, the communication signal 32 is stabilized for a short period of time. The observed power levels between the beacon signal 34 and the communication signal 32 are compared and their ratio is recorded as a constant of calibration. The communication signal 32 may be stabilized for a short period of time via a number of techniques. For example, an equal power can be given to all the active beams eliminating the effect of traffic variations on the signal level. The beacon 30 radiates constant power whereas the radiated power of the communication signal depends on the beam weather status.

Display 42 provides a visual indication to the system operator as to the weather condition or status of each cell. As mentioned above, each cell may have a different color depending on the weather status.

Referring now to Figure 3, one example of a color coding scheme is illustrated. In this table, a clear sky condition that is derived from the amount of attenuation within a cell is assigned color level C₁ and therefore the margin of increase of the signal broadcast from the satellite is increased by 0 decibels. Varying levels of rain may also correspond to different colors. For example, light rain may correspond to a color C₂ and an increased margin of power may be provided to increase the level by X₁. Various levels may be provided between a light rain condition and a heavy rain condition at the bottom of the chart. A heavy rain condition is assigned color Cₘ and corresponds to the maximum increase in margin Xₘₐₓ. Thus, various thresholds or a single threshold may be established by which the cell power is increased. Various thresholds are established if a scheme such as that in Figure 4 is established. A single threshold may be used if the scheme identifies "no attenuation" or "attenuation" for a single level of increasing a power margin. When the terminals within a cell request an increase that the NOC implements, a color change may be indicated on display 42. Each of the terminals in a cell are informed of a change in the weather status of the cell.

The NOC 16 manages power distribution in the cells. The NOC 16 has to provide adequate power to the cells to combat attenuation without robbing too much power from the power pool. If the NOC 16 reacts positively to a first increase request, false alarms may be generated and the power pool may be taxed unnecessarily. If on the other hand a long delay is implemented at NOC 16, a high outage rate may occur. To protect against false alarms, NOC 16 may require collaboration among terminals that are in close proximity to each other. The collaboration threshold is a system design parameter which among other things depends on the number of terminals in a cell. Various numbers of collaborations may be evident to those skilled in the art.

Another aspect of the invention is that the NOC 16 may also reduce power to a cell when attenuation has been reduced. The various cells are polled on regular intervals and in a similar manner to the increase, various terminals will indicate to the NOC 16 that their power level may be lowered. If a sufficient number of terminals 18 agree, then the NOC 16 may communicate to satellite a change in the power table and a new color code may be displayed on display 42.

Referring now to Figure 4, an operational flow diagram of a downlink power control system 12 is illustrated. In the first step, the spacecraft transmits a stable signal such as a beacon signal in step 52. If the signal (or channel) degrades as indicated in step 54, the terminal estimates the link degradation from the stable signal. In step 58, if the link degradation estimation is no worse than the current degradation or cell color, no action is implemented in step 60. If the link estimation is worse than the current degradation, step 62 is implemented. In step 62 the terminal reports a desired change in cell color or an increased attenuation level to the NOC 16. The NOC 16 processes each terminal's reports in step 64 and determines whether the reports are collaborated in step 66. In step 66, if the reports are not collaborated then the NOC 16 stores the reports for future collaboration and a terminal failure detection mode may be implemented. In step 66 if the reports are collaborated, the NOC 16 has a positive report of attenuation within the cell and notifies the spacecraft to modify the cell power by changing the power table in step 72. The terminals may also be communicated to in step 74 of the change in status of the particular cell. In step 74, the power level change is communicated to the terminal through a cell color or other communication.

Referring now to Figure 5, an alternative embodiment to the downlink power control system 12 is provided. In this embodiment, a remote attenuation monitor such as a radar source 76 may be coupled to NOC 16. In this embodiment, remote sensing of a condition of a cell is implemented. In addition to radar source 76, remote sensing data may be obtained from a meteorological satellite imagery and rainfall measurements. The radar source 76, however, provides the most amount of information of the remote sensing approaches. Generally in this embodiment, the attenuation monitor, such as a radar source, is monitored by the NOC 16 to determine the amount of attenuation, rain or other indicators that correspond to the attenuation level within a cell. This system provides the advantage that no system resources are used for transmission of signals and therefore does not impose any overhead on the transmission system.

An example of a suitable radar source is the NEXRAD which consists of approximately 140 radar sites in the continental United States that are operated by the Weather Service. Radar observations may be converted to an attenuation or an attenuation signal indicative of the amount of attention for each cell. In turn, the NOC 16 may communicate to satellite 14 the updated power table in a similar manner to that described above. Radar measures the reflectivity of the rain in units of dBz. The reflectivity may be converted to an attenuation in decibels by known methods such as that described by E. Wolf, et al in the art cited. The NEXRAD system continuously scans the skies and reports information which may be received by NOC 16. Typically, these observations are made with relatively little delay, in the order of a few minutes. Because a rain event is typically not an instantaneous event, a few minute delay is deemed acceptable.

Referring now to Figure 6, a method of operating a system according to Figure 5 is illustrated. In this embodiment, a remote sensing source provides information to NOC 16 with respect to the various cells. In step 80, the remote sensing data is processed by the NOC 16. Based on the information the NOC 16 identifies cells at risk for rain in step 82. The NOC 16 in step 84 provides information to the satellite in step 86 to increase the margin of cells at risk. In step 84 the terminals are also notified.

Referring now to Figure 7, a third alternative may be used that combines the methods illustrated in Figure 6 and Figure 4. In this embodiment, a hybrid downlink power control system 90 is illustrated. In this embodiment the network operations center 16 combines information from a remote attenuation monitor such as radar source 76 and from ground terminals 18 using a beacon generated at the satellite. In this manner the radar data may be used to forecast a weather condition in a cell. Cells with no rain forecast do not need any additional margin above the "clear sky" power level. The cells that have a rain forecast in the near future are provided with adequate margin to sustain a healthy link in spite of control loop delay.

If the system has a significant number of terminals, the number of terminals reporting to the NOC 16 may be reduced to prevent overloading the system, for example, in a fast moving storm. Desirable terminals may be spaced a predetermined distance from each other to provide a relatively even coverage throughout the cell. This predetermined number of space-to-part cells may provide a collaboration threshold of a predetermined number. For example, if a collaboration threshold of 10 is used, only 10 reports are necessary to ensure a power increase. Any further reports would be discarded by the NOC 16.

The present concept has been illustrated above with respect to a satellite resource such as power sharing. However, the present invention may be applied to various satellite resources such as effective isotropic radiated power (EIRP), time slots for time division multiplexing, and bandwidth. For these cases, the degradation effect is measured within each cell and communicated to the NOC 16. When the levels of the resources reach a predetermined threshold, the allocation resource level may be changed. For EIRP, for example, the gain or power may be increased.

While particular embodiments of the invention have been shown and described, numerous variations alternate embodiments will occur to those skilled in the art. Accordingly, it is intended that the invention be limited only in terms of the appended claims.

## Claims

1. A method of controlling downlink power comprises the steps of:
generating a plurality of beams (32) to a respective one of a plurality of cells (36) in a service area (38), each beam (32) having a predetermined power level;
**characterized by**
monitoring an attenuation level within each cell (36); and
increasing said predetermined power level of a cell (36) when said attenuation is above a predetermined threshold indicative of a weather-hampered status.

2. The method of claim 1, **characterized in that** the step of monitoring comprises collecting data from a radar source (76).

3. The method of claim 1, **characterized in that** the step of monitoring comprises:
broadcasting a beacon signal (34) into a cell (36);
monitoring attenuation of the beacon signal (34) in a cell (36) at a terminal (18) within the cell (36); and
generating a signal to a network operations center (16) indicative of a weather status of the cell (36).

4. The method of claim 3, **characterized in that** the step of monitoring an attenuation level comprises:
monitoring the attenuation of the beacon signal (34) in a plurality of terminals (18); and
generating a signal from each terminal (18) to a network operations center (16) indicative of weather status;
wherein the step of increasing comprises the step of determining the number of terminals (18) indicating a weather-hampered status and generating increased power when a predetermined number of terminals (18) indicate a weather-hampered status.

5. The method of claim 1, **characterized by** calibrating a beacon signal (34).

6. The method of claim 5, **characterized in that** the step of calibrating a beacon signal comprises the steps of:
stabilizing the communications signal power level for a time period;
observing the ratio of the beacon signal (34) and a communication signal (32).

7. The method of claim 1, **characterized in that** said weather-hampered status comprises:
a predetermined number of levels (C₁-C_{M}) ranging from clear to severely weather-hampered; and
controlling power at various levels corresponding to said weather status levels.

8. The method of claim 1, **characterized in that** an attenuation level is provided from both a radar source (76) and a beacon (30, 34).

9. A satellite communication system (10) comprising:
a satellite (14) generating a plurality of beams (32), said satellite (14) having a power table (28) having a power level associated with each beam (32); and
an attenuation monitor generating an attenuation signal for each beam;
**characterized by**
a network operations center (16) coupled to said attenuation monitor and receiving said attenuation signals for each beam (32), said network operations center (16) increasing a power level of a beam (32) generated by said satellite (14) in response to an attenuation signal increasing above an attenuation threshold.

10. The communication system of claim 9, **characterized in that** said network operations center (16) generates a change in the power table (28) to said satellite (14).
